# EUROPÄISCHE PATENTSCHRIFT

(11) **EP 1 991 766 B1**
(45) Veröffentlichungstag und Bekanntmachung des Hinweises auf die Patenterteilung: **22.12.2010**
(21) Anmeldenummer: 07711719.0
(22) Anmeldetag: 01.03.2007
(51) Int. Cl.: F01N 3/035, F01N 3/08, F01N 3/20

(54) **ABGASNACHBEHANDLUNGSSYSTEM UND VERFAHREN ZUR ABGASREINIGUNG**
EXHAUST GAS AFTERTREATMENT SYSTEM AND EXHAUST GAS CLEANING METHOD
SYSTEME DE POST-TRAITEMENT DES GAZ D'ECHAPPEMENT ET PROCEDE DE PURIFICATION DES GAZ D'ECHAPPEMENT

(30) Priorität: 03.03.2006 DE 102006009934
(43) Veröffentlichungstag der Anmeldung: 19.11.2008
(73) Patentinhaber: Daimler AG, 70327 Stuttgart (DE)
(72) Erfinder: BRAUN, Tillmann, 73663 Berglen (DE); ESPEY, Christoph, 73730 Esslingen (DE); GORBACH, Andreas, 72766 Reutlingen (DE); ZUSCHLAG, Axel, 70180 Stuttgart (DE)
(74) Vertreter: JENSEN & SON
(86) Internationale Anmeldenummer: PCT/EP2007/001742
(87) Internationale Veröffentlichungsnummer: WO 2007/101597

(56) Entgegenhaltungen:
- EP-A- 1 421 987
- DE-A1- 10 347 133
- JP-A- 2002 364 338

## Beschreibung

Die Erfindung betrifft ein Abgasnachbehandlungssystem und ein Verfahren zur Abgasreinigung nach den Oberbegriffen der unabhängigen Ansprüche.

Abgasbehandlung dient der Konvertierung und Rückhaltung gesetzlich limitierter Schadstoffkomponenten im Abgas von Verbrennungsmotoren.

Die Patentschrift US 6,467,257 B1 offenbart ein Abgasnachbehandlungssystem mit einem auf einen Katalysator zur selektiven katalytischen Reduktion (SCR) von Stickoxiden (NOx) folgenden Partikelfilter zur Entfernung von Rußpartikeln im Abgas.

Aus der Offenlegungsschrift EP 1 469 173 A1 ist ein Abgasnachbehandlungssystem bekannt, bei dem ein Oxidationskatalysator vor einem SCR-Katalysator und einem darauf folgenden Partikelfilter geschaltet ist. Zwischen dem Oxidationskatalysator und dem SCR-Katalysator ist ein Wärmetauscher geschaltet. Abgas kann dort gekühlt werden oder den Wärmetauscher umgehen. Ein separater Brenner versorgt den Partikelfilter mit thermischer Energie zur Regeneration des Partikelfilters durch Abbrennen des abgelagerten Rußes.

Aus der Offenlegungsschrift DE 103 47 133 A1 ist ein Abgasnachbehandlungssystem bekannt, bei dem ein Oxidationskatalysator mit einer Kraftstoffzudosierung nach einem SCR-Katalysator angeordnet ist. Auf den Oxidationskatalysator folgt ein Partikelfilter. Ein weiterer Oxidationskatalysator ist dem SCR-Katalysator vorgeschaltet.

Die Offenlegungschriften DE 103 48 492 A1 und EP 1 421 987 A2 zeigen weitere einschlägige Abgasnachbehandlungssysteme.

Aufgabe der Erfindung ist es, ein Abgasnachbehandlungssystem und ein Verfahren zur Abgasreinigung anzugeben, mit dem ein funktionsoptimierter Betrieb der Komponenten möglich ist.

Die Aufgabe wird erfindungsgemäß durch die Merkmale der unabhängigen Ansprüche gelöst.

Günstige Aus- und Weiterbildungen der Erfindung sind den weiteren Ansprüchen zu entnehmen.

Das erfindungsgemäße Abgasnachbehandlungssystem ist so ausgebildet, dass eine jeweilige Betriebstemperatur der NOx-Katalysator-Einrichtung und der Einrichtung zur Partikelentfernung unabhängig von einer Abgastemperatur an einem Ausgang des Verbrennungsmotors einstellbar ist. Von bekannten Abgasnachbehandlungssystemen unterscheidet sich die funktionsoptimierte Anordnung der NOx-Katalysator-Einrichtung, die vorzugsweise wenigstens einen SCR-Katalysator umfasst, und der Einrichtung zur Partikelentfernung, die im Wesentlichen von den Komponenten abhängt, mit denen die jeweilige Betriebstemperatur einstellbar ist. Vorzugsweise ist dies einmal eine Einheit zur Generierung einer Wärmetönung eingangseitig der NOx-Katalysator-Einrichtung sowie der Einrichtung zur aktiven Anhebung der Abgastemperatur eingangs der Einrichtung zur Partikelentfernung.

Vorzugsweise ist neben der Einrichtung zur aktiven Anhebung einer Abgastemperatur stromauf vor einer Einrichtung zur Partikelentfernung zusätzlich eine Einheit zur Generierung einer Wärmetönung zur Temperierung einer NOx-Katalysator-Einrichtung auf, wobei die NOx-Katalysator-Einrichtung von der Abgastemperatur des Verbrennungsmotors abkoppelbar ist. Sowohl die Einrichtung zur Partikelentfernung als auch die NOx-Katalysator-Einrichtung sind funktionsoptimiert betreibbar. Die Einheit zur Generierung einer Wärmetönung ermöglicht einen optimierten Betrieb des bevorzugten SCR-Katalysators hinsichtlich seines Umsatzes an Stickoxiden (NOx). Dazu kann die Temperatur des SC-R-Katalysators geregelt werden. Zudem kann die Temperatur des zweiten Oxidationskatalysators so eingestellt werden, dass ein Einsatz einer Kraftstoffzudosierung möglich wird. Somit sind die Funktionalitäten der NOx-Katalysator-Einrichtung und der Einrichtung zur Partikelentfernung nicht mehr an die Abgastemperaturen des Verbrennungsmotors gekoppelt. Das Abgasnachbehandlungssystem kann folglich entkoppelt vom Verbrennungsmotor betrieben werden.

Bevorzugt ist die Einheit zur Generierung einer Wärmetönung stromauf der NOx-Katalysator-Einrichtung und stromab einer ersten Oxidationskatalysator-Einrichtung angeordnet.

Alternativ kann die Einheit zur Generierung einer Wärmetönung auch stromauf der ersten Oxidationskatalysator-Einrichtung angeordnet sein.

Weiterhin kann die Einrichtung zur aktiven Anhebung einer Abgastemperatur neben einer zweiten Oxidationskatalysator-Einrichtung mit wenigstens einem Oxidationskatalysator wenigstens eine Kraftstoffzudosierung umfassen. Dabei kann die Oxidationskatalysator-Einrichtung einflutig oder zweiflutig ausgebildet sein, wobei für jeden Oxidationskatalysator die Kraftstoffzudosierung separat vorgesehen sein kann. Alternativ kann eine einzige Kraftstoffzudosierung zur gemeinsamen Versorgung aller Oxidationskatalysatoren der Einrichtung zur aktiven Anhebung einer Abgastemperatur vorgesehen sein.

Die NOx-Katalysator-Einrichtung kann ebenso einflutig oder zweiflutig ausgeführt sein.

Ferner kann die Einrichtung zur Partikelentfernung wenigstens einen Partikelfilter aufweisen, wobei die Einrichtung zur Partikelentfernung einflutig oder zweiflutig ausgebildet sein kann.

Es kann stromab nach der Einrichtung zur Partikelentfernung eine dritte Oxidationskatalysator-Einrichtung vorgesehen sein.

Dabei kann die dritte Oxidationskatalysator-Einrichtung einflutig oder zweiflutig ausgebildet sein.

Die zweite und/oder dritte Oxidationskatalysator-Einheit kann eingespart werden, wenn die Einrichtung zur Partikelentfernung eine geeignete katalytische Beschichtung des Partikelfilters oder der Partikelfilter aufweist.

Stromauf vor der ersten Oxidationskatalysator-Einheit und/oder stromab nach der Einheit zur Generierung einer Wärmetönung und/oder stromauf vor der NOx-Katalysator-Einrichtung und/oder stromab nach der NOx-Katalysator-Einrichtung und/oder stromauf vor der zweiten Oxidationskatalysator-Einrichtung und/oder stromauf vor der Einrichtung zur Partikelentfernung und/oder stromab nach der Einrichtung zur Partikelentfernung kann wenigstens ein Temperatursensor vorgesehen sein.

Zweckmäßigerweise kann stromab nach der NOx-Katalysator-Einrichtung ein Ammoniaksensor vorgesehen sein, mit dem eine verbesserte Regelung der Zugabe von Reduktionsmittel, insbesondere wässrige Harnstofflösung, zur NOx-Katalysator-Einrichtung erfolgen kann.

Vorteilhaft kann stromab nach der NOx-Katalysator-Einrichtung und/oder stromauf vor der ersten Oxidationskatalysator-Einrichtung ein NOx-Sensor vorgesehen sein. Die Anordnung nach der NOx-Katalysator-Einrichtung erlaubt eine verbesserte Regelung der Zugabe des Reduktionsmittels und/oder einer etwaigen On-Board-Diagnose (OBD). On-Board-Diagnose bedeutet, abgasrelevante Bauteile und Systeme während der Fahrt zu überwachen, Fehlfunktionen festzuhalten und beispielsweise durch eine Warnlampe anzuzeigen und in der Werkstatt an ein Scantool zu übertragen. Außerdem sollen gefährdete Bauteile wie Katalysatoren geschützt werden. Die Anordnung vor der ersten Oxidationskatalysator-Einrichtung kann zur Quantifizierung von Rohemissionen und den resultierenden Anforderungen an die NOx-Katalysator-Einrichtung dienen.

Stromauf vor und stromab nach der Einrichtung zur Partikelentfernung kann je ein Drucksensor vorgesehen sein. Damit gelingt eine Abschätzung des Ruß- und/oder Aschegehalts in der Einrichtung zur Partikelentfernung und somit zur Regelung der Kraftstoffzudosierung.

Das erfindungsgemäße Verfahren zur Abgasreinigung in einem Abgasnachbehandlungssystem sieht vor, dass neben der Einrichtung zur Partikelentfernung die NOx-Katalysator-Einrichtung bedarfsweise unabhängig von der Abgastemperatur des Verbrennungsmotors betrieben werden kann.

Bevorzugt kann die Einheit zur Generierung einer Wärmetönung zur Temperierung der NOx-Katalysator-Einrichtung aktiv werden, wenn ein geregelter Betrieb einer Zudosierung von Reduktionsmittel in die NOx-Katalysator-Einrichtung und/oder ein geregelter Betrieb der Einrichtung zur aktiven Anhebung einer Abgastemperatur erforderlich ist und sich die NOx-Katalysator-Einrichtung und/oder ein zweiter Oxidationskatalysator der Einrichtung zur aktiven Anhebung einer Abgastemperatur außerhalb eines jeweils bevorzugten Temperaturbereichs befinden/befindet.

Weiterhin kann ein geregelter Betrieb der Einrichtung zur aktiven Anhebung einer Abgastemperatur erfolgen, wenn ein Druckverlustanstieg der Einrichtung zur Partikelentfernung über einen Schwellwert und/oder eine zu erwartende Temperatur in der Einrichtung zur Partikelentfernung mit aktiver Einrichtung zur Anhebung einer Abgastemperatur einen Grenzwert überschreitet und/oder eine Beladung der Einrichtung zur Partikelentfernung einen zulässigen Grenzwert überschreiten/überschreitet.

Günstigerweise kann bei aktiver Einrichtung zur Anhebung einer Abgastemperatur eine mittlere Temperatur der Einrichtung zur Partikelentfernung zwischen 550°C und 850°C, vorzugsweise zwischen 600°C und 800°C liegen.

Vorteilhafterweise kann bei geregeltem Betrieb der Einrichtung zur Anhebung einer Abgastemperatur deren Temperatur ihrer Oxidationskatalysator-Einrichtung mehr als 250°C, vorzugsweise mehr als 300°C betragen.

Weitere Vorteile und Einzelheiten der Erfindung werden im Folgenden anhand von in der Zeichnung beschriebenen bevorzugten Ausführungsbeispielen näher erläutert, ohne auf diese Ausführungsbeispiele beschränkt zu sein.

Dabei zeigen:
- Fig. 1: eine erste Ausgestaltung eines bevorzugten Abgasnachbehandlungssystems mit einflutiger Abgasführung,
- Fig. 2: eine weitere Ausgestaltung eines bevorzugten Abgasnachbehandlungssystems mit einflutiger Abgasführung,
- Fig. 3: eine weitere Ausgestaltung eines bevorzugten Abgasnachbehandlungssystems mit teilweise zweiflutiger Abgasführung,
- Fig. 4: eine weitere Ausgestaltung eines bevorzugten Abgasnachbehandlungssystems mit teilweise zweiflutiger Abgasführung, und
- Fig. 5: eine weitere Ausgestaltung eines bevorzugten Abgasnachbehandlungssystems mit teilweise zweiflutiger Abgasführung und einflutigem ausgangsseitigen Oxidationskatalysator.

In den Figuren sind funktionell gleich wirkende Komponenten mit gleichen Bezugszeichen beziffert.

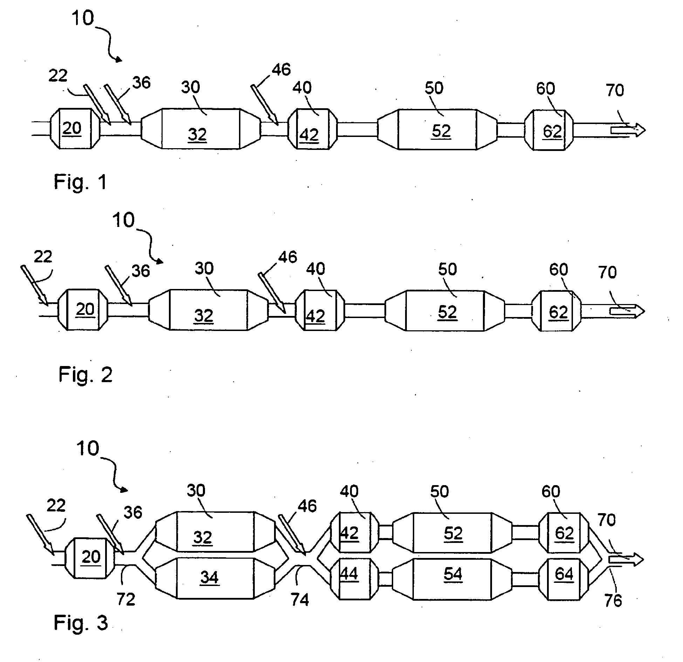

Eine erste Ausgestaltung der Erfindung zeigt Figur 1. Ein bevorzugtes Abgasnachbehandlungssystem 10 eines nicht dargestellten Verbrennungsmotors weist in einer ersten Ausgestaltung in Strömungsrichtung 70 des Abgases aufeinander folgend zunächst eine erste Oxidationskatalysator-Einrichtung 20, eine NOx-Katalysator-Einrichtung 30 zur Entstickung des Abgases, vorzugsweise mit einem SCR-Katalysator 32, eine Einrichtung 40 zur aktiven Anhebung der Abgastemperatur, eine Einrichtung 50 zur Partikelentfernung und eine dritte Oxidationskatalysator-Einrichtung 60.

Zwischen den beiden ersten Komponenten, der ersten Oxidationskatalysator-Einrichtung 20 und der NOx-Katalysator-Einrichtung 30 zur Entstickung des Abgases, trägt eine infusive Einheit 22 zur Generierung einer Wärmetönung zur Temperierung der NOx-Katalysator-Einrichtung 30 Wärme ein. Der Energieeintrag der infusiven Einheit 22 kann durch Verbrennung einer flüssigen oder gasförmigen Substanz, und/oder durch Strahlung und/oder durch elektrische Energie und/oder durch einen Wärmetauscher und/oder durch einen heißen Gasstrom erfolgen. Einheit 22 dient zur Einstellung einer für die NOx-Reduktion in der NOx-Katalysator-Einrichtung 30 günstigen Temperatur sowie der Bereitstellung einer für eine aktive Regeneration der Einheit 50 zur Partikelentfernung geeigneten Temperatur der Einrichtung 40 zur aktiven Anhebung der Abgastemperatur mit dem Oxidationskatalysator 42.

Eine weitere infusive Einheit 36 führt dem SCR-Katalysator 32 ein Reduktionsmittel, bzw. ein Ausgangsmittel eines Reduktionsmittels, zu, beispielsweise eine wässrige Harnstofflösung, Kohlenwasserstoff oder dergleichen. Im ersten Oxidationskatalysator 20 werden unverbrannte Kohlenwasserstoffe, Kohlenmonoxid und Partikel möglichst vollständig zu Stickstoffmonoxid (NO) und teilweise zu Stickstoffdioxid (NO2) oxidiert. Die Einheit 36 sprüht das Reduktionsmittel, etwa Harnstofflösung, in den durch die Einheit 22 geeignet temperierten heißen Abgasstrom, wo es zu Ammoniak (NH3) und Kohlendioxid (CO2) hydrolisiert. In der eigentlichen selektiven Reduktion reagiert dann das NH3 mit dem NO/NO2-Gemisch zu Stickstoff und Wasser. Die Reaktion erfolgt an einem Katalysator, der üblicherweise aus Übergangsmetallverbindungen auf einem keramischen Träger besteht. In einem nachgeschalteten zweiten Oxidationskatalysator 42 einer Einheit 40 zur aktiven Anhebung der Abgastemperatur können unverbrauchte NH3-Anteile umgesetzt werden.

Die Einheit 40 zur aktiven Anhebung der Abgastemperatur umfasst neben dem Oxidationskatalysator 42 eine Kraftstoffzudosierung 46, mit der bedarfsweise Kraftstoff in den Abgaskanal zudosiert werden kann, um durch dessen Oxidation eine geeignete Temperatur im Oxidationskatalysator 42 einzustellen. Die resultierende Wärmetönung kann zur aktiven, geregelten Regeneration des Partikelfilters 52 der stromab folgenden Einrichtung 50 zur Partikelentfernung genutzt werden, ohne dass der Verbrennungsmotor in seinen aktuellen Betriebsbedingungen für eine solche Regenerationsphase angepasst werden muss. Der Oxidationskatalysator 42 kann durch eine geeignete katalytische Beschichtung des Partikelfilters 52 ersetzt oder ergänzt werden.

Der Partikelfilter 52 besteht vorzugsweise aus einer Einheit zur Zurückhaltung der im Abgas enthaltenen Russpartikel, die bei entsprechender Abgastemperaturanhebung durch die Einheit 40 abgebrannt werden können. Der Partikelfilter 52 kann mit oder ohne katalytische Beschichtung ausgeführt sein.

Die dritte Oxidationskatalysator-Einrichtung 60 mit ihrem Oxidationskatalysator 62 dient der Oxidation von während eines Betriebs der Einheit 40 zur aktiven Abgastemperaturerhöhung nicht vollständig oxidierten Komponenten im Abgas. Die Oxidationskatalysator-Einrichtung 60 kann durch eine geeignete katalytische Beschichtung des Partikelfilters 52 ersetzt oder ergänzt werden.

Nicht dargestellt sind eventuell vorhandene, geeignet platzierte Temperatursensoren, Ammoniaksensoren, NOx-Sensoren, Drucksensoren.

So kann stromauf vor der ersten Oxidationskatalysator-Einheit 20 und/oder stromab nach der Einheit 22 zur Generierung einer Wärmetönung und/oder stromauf vor der NOx-Katalysator-Einrichtung 30 und/oder stromab nach der NOx-Katalysator-Einrichtung 30 und/oder stromauf vor der Einrichtung 40 zur aktiven Anhebung der Abgastemperatur und/oder stromauf vor der Einrichtung 50 zur Partikelentfernung und/oder stromab nach der Einrichtung 50 zur Partikelentfernung wenigstens ein Temperatursensor vorgesehen sein. Die Platzierung stromauf vor der ersten Oxidationskatalysator-Einheit 20 erlaubt eine Abschätzung des NO2-Anteils im Abgas am Ausgang der Oxidationskatalysator-Einheit 20. Durch die Platzierung stromab nach der Einheit 22 zur Generierung einer Wärmetönung kann deren Funktionalität geprüft werden und gegebenenfalls eine Fehlfunktion erkannt werden. Die Platzierung stromauf vor der NOx-Katalysator-Einrichtung 30 und/oder stromab nach der NOx-Katalysator-Einrichtung 30 erlaubt eine Regelung der Zugabe des Reduktionsmittels mit Einheit 36.

Die Platzierung eines Ammoniaksensors stromab nach der NOx-Katalysator-Einrichtung 30 erlaubt eine verbesserte Regelung der Zugabe des Reduktionsmittels mit Einheit 36.

Die Platzierung eines NOx-Sensors stromab nach der NOx-Katalysator-Einrichtung 30 erlaubt eine verbesserte Regelung der Zugabe des Reduktionsmittels mit Einheit 36 und/oder eine bessere Diagnose (On-Board-Diagnose). Die Platzierung stromauf vor der ersten Oxidationskatalysator-Einrichtung 20 ermöglicht eine Quantifizierung von Rohemissionen und den daraus resultierenden Anforderungen an das Subsystem der NOx-Katalysatoreinrichtung 30.

Durch eine Platzierung je eines Drucksensors stromauf vor und stromab nach der Einrichtung 50 zur Partikelentfernung kann eine Abschätzung des Ruß- oder Aschegehalts im Partikelfilter 52 und somit eine Regelung der Kraftstoffzudosierung 46 erfolgen.

Ferner ist auch ein zeichnerisch nicht dargestelltes Steuergerät vorgesehen, das mit den Sensoren verbunden ist und das zur Regelung der Einheit 22 zur Generierung einer Wärmetönung, der Einheit 36 zur Dosierung eines Reduktionsmittels und der Kraftstoffzudosierung 46 sowie zur Kommunikation mit einem üblichen Motorsteuergerät, welches den Verbrennungsmotor steuert, dient.

Figur 2 zeigt eine alternative Ausgestaltung des Abgasnachbehandlungssystems 10 in Figur 1, bei der die Einheit 22 zur Generierung einer Wärmetönung stromauf der ersten Oxidationskatalysator-Einrichtung 20 angeordnet ist. Ansonsten ist die Anordnung der Komponenten gleich. Die Einheit 22 kann in den folgenden Ausführungsbeispielen vor oder nach der ersten Oxidationskatalysator-Einrichtung 20 angeordnet sein.

Das Ausführungsbeispiel der Figur 3 illustriert eine weitere bevorzugte Variante des Abgasnachbehandlungssystems 10, bei der die NOx-Katalysator-Einrichtung 30, Einheit 40 zur aktiven Anhebung der Abgastemperatur, die Einrichtung 50 zur Partikelentfernung und die die dritte Oxidationskatalysator-Einrichtung 60 jeweils zweiflutig ausgebildet sind. Die für die einflutige Ausgestaltung der einzelnen Komponenten erläuterten Funktionalitäten, Ausgestaltungen und Alternativen gelten sinngemäß auch für die Komponenten der zweiflutigen Ausführungen.

Die erste Oxidationskatalysator-Einheit 20 ist einflutig vor der Flutentrennung angeordnet. Die Einheit 36, mit der das Reduktionsmittel zudosiert wird, ist beiden SCR-Katalysatoren 32, 34 gemeinsam.

Die NOx-Katalysator-Einrichtung 30 umfasst dabei zwei strömungsmäßig parallel geschaltete SCR-Katalysatoren 32, 34. Die Einrichtung 40 zur aktiven Anhebung der Abgastemperatur umfasst zwei strömungsmäßig parallel geschaltete Oxidationskatalysatoren 42, 44, die Einrichtung 50 zur Partikelentfernung zwei strömungsmäßig parallel geschaltete Partikelfilter 52, 54, und die Oxidationskatalysator-Einrichtung 60 zwei strömungsmäßig parallel geschaltete Oxidationskatalysatoren 62, 64.

Eingangs der ersten Oxidationskatalysator-Einrichtung 20 ist, wie im Ausführungsbeispiel der Figur 2, die infusive Einheit 22 zur Zuführung einer Wärmetönung angeordnet und zwischen der ersten Oxidationskatalysator-Einrichtung 20 und vor einer Flutentrennung 72 vor der NOx-Katalysator-Einrichtung 30 die Einheit 36 zur Zuführung von Reduktionsmittel für die SCR-Katalysatoren 32, 34 der NOx-Katalysator-Einrichtung 30.

In der Flutenzusammenführung 74 stromab hinter der NOx-Katalysator-Einrichtung 30 ist die Kraftstoffzudosierung 46 für die beiden Oxidationskatalysatoren 42, 44 der Einheit 40 zur aktiven Anhebung der Abgastemperatur angeordnet.

Stromab der dritten Oxidationskatalysator-Einheit 60 mündet die zweiflutige Abgasführung der NOx-Katalysator-Einrichtung 30, der Einheit 40 zur aktiven Abgastemperaturanhebung und der dritten Oxidationskatalysator-Einheit 60 in eine Flutenzusammenführung 76.

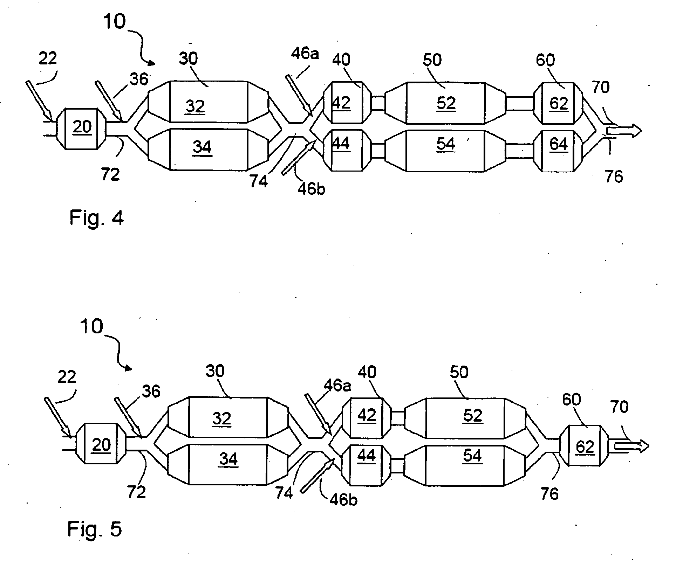

Figur 4 zeigt eine der Figur 3 entsprechende Ausgestaltung des Abgasnachbehandlungssystems 10 mit dem Unterschied, dass die Kraftstoffzudosierung 46 separat in jeder Flut für den jeweiligen Oxidationskatalysator 42, 44 der Einheit 40 zur aktiven Anhebung der Abgastemperatur vorgesehen ist. Diese zweifache Ausführung der Kraftstoffzudosierung 46 ermöglicht eine Regelung der Temperatur nach der Flutenzusammenführung 74.

Figur 5 zeigt eine weitere Variante des erfindungsgemäßen Abgasnachbehandlungssystems 10, die weitgehend der zweiflutigen Ausgestaltung in Figur 4 entspricht. In der gezeigten Ausgestaltung ist nunmehr jedoch die dritte Oxidationskatalysator-Einheit 60 nach einer Flutzusammenführung 76 einflutig geführt.

Für alle in den Ausführungsbeispielen gezeigten zweiflutigen Anordnungen kann auch auf eine Flutenzusammenführung 76 nach der dritten Oxidationskatalysator-Einheit 60 verzichtet werden, gegebenenfalls kann auch auf eine Flutenzusammenführung 74 nach der NOx-Katalysator-Einheit 30 verzichtet werden.

Für einen geregelten Betrieb der Einheit 36 zur Reduktionsmittelzufuhr ist eine SCR-Katalysatortemperatur von mindestens 150°C, vorzugsweise mindestens 200°C und maximal 500°C, vorzugsweise maximal 500°C bevorzugt. Die Einheit 36 ist aktiv, wenn die Rohemission des Verbrennungsmotors an NOx höher ist als der gesetzlich geforderte Grenzwert.

Für den Betrieb der NOx-Reduktion sind eine Temperatur der ersten Oxidationskatalysator-Einheit 20 von mindestens 120°C, vorzugsweise mindestens 150°C und eine SCR-Katalysatortemperatur von mindestens 180°C, vorzugsweise mindestens 200°C bevorzugt.

Für den geregelten Betrieb der Kraftstoffzudosierung 46 ist eine Temperatur des zweiten Oxidationskatalysators 42 oder der zweiten Oxidationskatalysatoren 42, 44 von über 280°C, vorzugsweise über 300°C bevorzugt. Die Kraftstoffzudosierung ist aktiv, wenn die Beladung der Einheit 50 zur Partikelentfernung mit Ruß und/oder Asche einen Schwellenwert des resultierenden Druckverlustanstiegs über dem oder den Partikelfilter (n) 52, 54, beispielsweise im Bereich von 50 bis 200 mbar, überschreitet und/oder wenn die zu erwartende Temperatur in dem oder den Partikelfilter(n) 52, 54 einen bestimmten Schwellenwert überschreitet, beispielsweise im Bereich von 700°C bis 800°C und/oder wenn die Beladung des oder der Partikelfilter(s) 52, 54 einen bestimmten Schwellenwert überschreitet, beispielsweise 2g/l bis 15 g/l.

Während des Betriebs der Kraftstoffzudosierung 46 ist eine mittlere Temperatur des oder der Partikelfilter(s) 52, 54 von mindestens 550°C, vorzugsweise mindestens 600°C und maximal 850°C, vorzugsweise maximal 800°C bevorzugt.

Die Einheit 22 zur Generierung einer Wärmetönung ist zweckmäßigerweise so ausgelegt, dass der Betrieb im gesamten Zustandsraum der motorischen Systemgrößen möglich ist. Die Einheit 22 wird aktiv, wenn ein geregelter Betrieb der Einheit 36 zur Reduktionsmittelzudosierung und/oder ein geregelter Betrieb der Kraftstoffzudosierung 46 erforderlich ist und sich die SCR-Katalysatortemperatur beziehungsweise die Temperatur des Oxidationskatalysators 42 oder der Oxidationskatalysatoren 42, 44 nicht im jeweils bevorzugten Bereich befinden.

## Patentansprüche

1. Abgasnachbehandlungssystem mit in Strömungsrichtung (70) von Abgas eines Verbrennungsmotors hintereinander angeordneter, abgasdurchströmten ersten Oxidationskatalysator-Einrichtung (20), einer NOx-Katalysator-Einrichtung (30) zur Entstickung des Abgases, einer Einrichtung (40) zur aktiven Anhebung einer Abgastemperatur mit wenigstens einer zweiten Oxidationskatalysator-Einrichtung sowie einer Einrichtung (50) zur Partikelentfernung, wobei eine jeweilige Betriebstemperatur der NOx-Katalysator-Einrichtung (30) und der Einrichtung (50) zur Partikelentfernung unabhängig von einer Abgastemperatur an einem Ausgang des Verbrennungsmotors einstellbar ist,
**dadurch gekennzeichnet, dass**
die NOx-Katalysator-Einrichtung (30) einen Ammoniak als Stickoxid-Reduktionsmittel verwendenden SCR-Katalysator umfasst und eine infusive Einheit (36) vorgesehen ist, welche ein Ausgangsmittel des Stickoxid-Reduktionsmittels dem Abgas stromab von der ersten Oxidationskatalysator-Einrichtung (20) und stromauf von der NOx-Katalysator-Einrichtung (30) zuführen kann und ferner die Einrichtung (40) zur aktiven Anhebung einer Abgastemperatur wenigstens eine Kraftstoffzudosierung (46) stromauf vor der zweiten Oxidationskatalysator-Einrichtung umfasst.

2. Abgasnachbehandlungssystem nach Anspruch 1,
**dadurch gekennzeichnet, dass**
eine Einheit (22) zur Generierung einer Wärmetönung zur Temperierung der NOx-Katalysator-Einrichtung (30) vorgesehen ist.

3. Abgasnachbehandlungssystem nach Anspruch 2,
**dadurch gekennzeichnet, dass**
die Einheit (22) zur Generierung einer Wärmetönung stromauf vor der ersten Oxidationskatalysator-Einrichtung (20) oder stromauf vor der NOx-Katalysator-Einrichtung (30) und stromab nach der ersten Oxidationskatalysator-Einrichtung (20) angeordnet ist.

4. Abgasnachbehandlungssystem nach einem der vorhergehenden Ansprüche,
**dadurch gekennzeichnet, dass**
die zweite Oxidationskatalysator-Einrichtung zweiflutig ausgebildet ist.

5. Abgasnachbehandlungssystem nach Anspruch 4,
**dadurch gekennzeichnet, dass**
für jeden Oxidationskatalysator (42, 44) die Kraftstoffzudosierung (46) separat vorgesehen ist.

6. Abgasnachbehandlungssystem nach Anspruch 4,
**dadurch gekennzeichnet, dass**
die einzige Kraftstoffzudosierung (46) alle Oxidationskatalysatoren (42, 44) der Einrichtung (40) zur aktiven Anhebung einer Abgastemperatur gemeinsam versorgt.

7. Abgasnachbehandlungssystem nach einem der vorhergehenden Ansprüche,
**dadurch gekennzeichnet, dass**
die NOx-Katalysator-Einrichtung (30) zweiflutig ausgeführt ist.

8. Abgasnachbehandlungssystem nach einem der vorhergehenden Ansprüche,
**dadurch gekennzeichnet, dass**
die Einrichtung (50) zur Partikelentfernung zweiflutig ausgebildet ist.

9. Abgasnachbehandlungssystem nach einem der vorhergehenden Ansprüche,
**dadurch gekennzeichnet, dass**
mindestens ein Oxidationskatalysator (42, 44) der Einrichtung (40) zur aktiven Anhebung der Abgastemperatur und/oder der erste Oxidationskatalysator (20) in die Einrichtung (50) zur Partikelenffemung integriert sind.

10. Abgasnachbehandlungssystem nach einem der vorhergehenden Ansprüche,
**dadurch gekennzeichnet, dass**
stromab nach der Einrichtung (50) zur Partikelentfernung eine dritte Oxidationskatalysator-Einrichtung (60) vorgesehen ist.

11. Abgasnachbehandlungssystem nach Anspruch 10,
**dadurch gekennzeichnet, dass**
die dritte Oxidationskatalysator-Einrichtung (60) einflutig oder zweiflutig ausgebildet ist.

12. Abgasnachbehandlungssystem nach einem der vorhergehenden Ansprüche,
**dadurch gekennzeichnet, dass**
stromauf vor der ersten Oxidationskatalysator-Einheit (20) und/oder stromab nach der Einheit (22) zur Generierung einer Wärmetönung und/oder stromauf vor der NOx-Katalysator-Einrichtung (30) und/oder stromab nach der NOx-Katalysator-Einrichtung (30) und/oder stromauf vor der Einrichtung (40) zur aktiven Anhebung der Abgastemperatur und/oder stromauf vor der Einrichtung (50) zur Partikelentfernung und/oder stromab nach der Einrichtung (50) zur Partikelentfernung wenigstens ein Temperatursensor vorgesehen ist.

13. Abgasnachbehandlungssystem nach einem der vorhergehenden Ansprüche,
**dadurch gekennzeichnet, dass**
stromab nach der NOx-Katalysator-Einrichtung (30) ein Ammoniaksensor und/oder ein NOx-Sensor stromab nach der NOx-Katalysator-Einrichtung (30) und/oder stromauf vor der ersten Oxidationskatalysator-Einrichtung (20) vorgesehen ist..

14. Abgasnachbehandlungssystem nach einem der vorhergehenden Ansprüche,
**dadurch gekennzeichnet, dass**
stromauf vor und stromab nach der Einrichtung (50) zur Partiketentfernung je ein Drucksensor vorgesehen ist.

15. Verfahren zur Abgasreinigung in einem Abgasnachbehandlungssystem mit in Strömungsrichtung (70) von Abgas eines Verbrennungsmotors hintereinander angeordneter ersten Oxidationskatalysator-Einrichtung (20), einer NOx-Katalysator-Einrichtung (30) zur Entstickung des Abgases, einer Einrichtung (40) zur aktiven Anhebung einer Abgastemperatur sowie einer Einrichtung (50) zur Partikelentfernung, wobei die NOx-Katalysator-Einrichtung (30) und die Einrichtung (50) zur Partikelentfernung bedarfsweise unabhängig von der Abgastemperatur an einem Ausgang des Verbrennungsmotors betrieben werden,
**dadurch gekennzeichnet, dass**
stromab von der ersten Oxidationskatalysator-Einrichtung (20) und stromauf von der NOx-Katalysator-Einrichtung (30) ein Ausgangsmittel für ein Ammoniak enthaltendes Stickoxid-Reduktionsmittel dem Abgas zugeführt wird und Stickoxide an der einen SCR-Katalysator umfassenden NOx-Katalysator-Einrichtung (30) unter Verwendung von Ammoniak reduziert werden und ferner für die Einrichtung (40) zur aktiven Anhebung einer Abgastemperatur wenigstens eine Kraftstoffzudosierung (46) stromauf einer zweiten Oxidationskatalysator-Einrichtung bereitgestellt wird.

16. Verfahren nach Anspruch 15,
**dadurch gekennzeichnet, dass**
eine Einheit (22) zur Generierung einer Wärmetönung zur Temperierung der NOx-Katalysator-Einrichtung (30) aktiv wird, wenn ein geregelter Betrieb einer Zudosierung von Reduktionsmittel in die NOx-Katalysator-Einrichtung (30) und/oder ein geregelter Betrieb der Einrichtung (40) zur aktiven Anhebung einer Abgastemperatur erforderlich ist und sich die NOx-Katalysator-Einrichtung (30) und/oder mindestens ein Oxidationskatalysator (42; 44) der Einrichtung (40) zur aktiven Anhebung einer Abgastemperatur außerhalb eines jeweils bevorzugten Temperaturbereichs befinden.

17. Verfahren nach Anspruch 15 oder 16,
**dadurch gekennzeichnet, dass**
ein geregelter Betrieb der Einrichtung (40) zur aktiven Anhebung einer Abgastemperatur erfolgt, wenn die Einrichtung (50) zur Partikelentfernung ein Druckverlustanstieg und/oder eine zu erwartende Temperatur in der Einrichtung (50) zur Partikelentfernung mit aktiver Einrichtung (40) zur Anhebung einer Abgastemperatur einen Grenzwert überschreitet/überschreiten und/oder eine Beladung der Einrichtung (50) zur Partikelentfernung einen zulässigen Grenzwert überschreiten/überschreitet.

18. Verfahren nach einem der Ansprüche 15 bis 17,
**dadurch gekennzeichnet, dass**
bei aktiver Einrichtung (40) zur Anhebung einer Abgastemperatur eine mittlere Temperatur der Einrichtung (50) zur Partikelentfernung zwischen 550°C und 850°C, vorzugsweise zwischen 600°C und 800°C liegt.

19. Verfahren nach einem der Ansprüche 15 bis 18,
**dadurch gekennzeichnet, dass**
bei geregeltem Betrieb der Einrichtung (40) zur Anhebung einer Abgastemperatur deren Temperatur ihrer Oxidationskatalysator-Einrichtung mehr als 250°C, vorzugsweise mehr als 300°C beträgt.

## Claims

1. Exhaust treatment system comprising, arranged in sequence in the direction (70) of the exhaust gas flow of an internal combustion engine, a first oxidising converter device (20) through which exhaust gas flows, a NOx converter device (30) for NOx reduction in the exhaust gas, a device (40) for actively raising an exhaust gas temperature with at least one second oxidising converter device and a device (50) for particulate removal, wherein a respective operating temperature of the NOx converter device (30) and the device (50) for particulate removal is adjustable independent of an exhaust gas temperature at an outlet of the internal combustion engine,
**characterised in that**
the NOx converter device (30) comprises an SCR catalytic converter using ammonia as a nitrogen oxide-reducing agent, and **in that** an infusive unit (36) is provided which is capable of adding to the exhaust gas a starting material of the nitrogen oxide-reducing agent downstream of the first oxidising converter device (20) and upstream of the NOx converter device (30), and **in that** the device (40) for actively raising an exhaust gas temperature further comprises at least one fuel metering unit (46) upstream of the second oxidising converter device.

2. Exhaust treatment system according to claim 1,
**characterised in that**
a unit (22) for generating a catalytic oxidation is provided for the temperature control of the NOx converter device (30).

3. Exhaust treatment system according to claim 2,
**characterised in that**
the unit (22) for generating a catalytic oxidation is placed upstream of the first oxidising converter device (20) or upstream of the NOx converter device (30) or downstream of the first oxidising converter device (20).

4. Exhaust treatment system according to any of the preceding claims,
**characterised in that**
the second oxidising converter device is designed double-flow.

5. Exhaust treatment system according to claim 4,
**characterised in that**
a separate fuel metering unit (46) is provided for each oxidising converter (42, 44).

6. Exhaust treatment system according to claim 4,
**characterised in that**
a single fuel metering unit (46) supplies all oxidising converters (42, 44) of the device (40) for actively raising an exhaust gas temperature.

7. Exhaust treatment system according to any of the preceding claims,
**characterised in that**
the NOx converter device (30) is designed double-flow.

8. Exhaust treatment system according to any of the preceding claims,
**characterised in that**
the device (50) for particulate removal is designed double-flow.

9. Exhaust treatment system according to any of the preceding claims,
**characterised in that**
at least one oxidising converter (42, 44) of the device (40) for actively raising an exhaust gas temperature and/or the first oxidising converter (20) is/are integrated into the device (50) for particulate removal.

10. Exhaust treatment system according to any of the preceding claims,
**characterised in that**
a third oxidising converter device (60) is provided downstream of the device (50) for particulate removal.

11. Exhaust treatment system according to claim 10,
**characterised in that**
the third oxidising converter device (60) is designed single-flow or double-flow.

12. Exhaust treatment system according to any of the preceding claims,
**characterised in that**
at least one temperature sensor is provided upstream of the first oxidising converter unit (20) and/or downstream of the unit (22) for generating a catalytic oxidation and/or upstream of the NOx converter device (30) and/or downstream of the NOx converter device (30) and/or upstream of the device (40) for actively raising the exhaust gas temperature and/or upstream of the device for (50) particulate removal and/or downstream of the device for particulate removal (50).

13. Exhaust treatment system according to any of the preceding claims,
**characterised in that**
an ammonia sensor is provided downstream of the NOx converter device (30) and/or a NOx sensor is provided downstream of the NOx converter device (30) and/or upstream of the first oxidising converter unit (20).

14. Exhaust treatment system according to any of the preceding claims,
**characterised in that**
a pressure sensor each is provided upstream and downstream of the device (50) for particulate removal.

15. Method for exhaust emission control in an exhaust treatment system comprising, arranged in sequence in the direction (70) of the exhaust gas flow of an internal combustion engine, a first oxidising converter device (20) through which exhaust gas flows, a NOx converter device (30) for NOx reduction in the exhaust gas, a device (40) for actively raising an exhaust gas temperature with at least one second oxidising converter device and a device (50) for particulate removal, wherein the NOx converter device (30) and the device (50) for particulate removal are operated as required independent of the exhaust gas temperature of the internal combustion engine,
**characterised in that**
a starting material for an ammonia-containing nitrogen oxide reducing agent is added to the exhaust gas downstream of the first oxidising converter device (20) and upstream of the NOx converter device (30), **in that** nitrogen oxides are reduced at the NOx converter device (30) comprising an SCR catalytic converter by means of ammonia, and **in that** further at least one fuel metering unit (46) is provided upstream of a second oxidising converter device for the device (40) for actively raising an exhaust gas temperature.

16. Method according to claim 15,
**characterised in that**
a unit (22) for generating a catalytic oxidation for the temperature control of the NOx converter device (30) becomes active if a controlled operation of a metered reducing agent addition into the NOx converter device (30) is required and/or if a controlled operation of the device (40) for actively raising an exhaust gas temperature is required and if the NOx converter device (30) and/or at least one oxidising converter (42; 44) of the device (40) for actively raising an exhaust gas temperature is/are outside a preferred respective temperature range.

17. Method according to claim 15 or 16,
**characterised in that**
a controlled operation of the device (40) for actively raising an exhaust gas temperature is initiated if the device (50) for particulate removal shows a pressure loss increase and/or if a temperature to be expected in the device (50) for particulate removal with active device (40) for raising an exhaust gas temperature exceeds a limit value and/or if a loading of the device (50) for particulate removal exceeds a permitted limit.

18. Method according to any of claims 15 to 17,
**characterised in that**
if the device (40) for raising an exhaust gas temperature is active, an average temperature of the device (50) for particulate removal lies between 550°C and 850°C, preferably between 600°C and 800°C.

19. Method according to any of claims 15 to 18,
**characterised in that**
during a controlled operation of the device (40) for raising an exhaust gas temperature, the temperature of its oxidising converter device is more than 250°C, preferably more than 300°C.

## Revendications

1. Système de post-traitement des gaz d'échappement comprenant, disposés les uns derrière les autres dans la direction d'écoulement (70) du gaz d'échappement d'un moteur à combustion interne, un premier dispositif de catalyseur d'oxydation (20) parcouru par les gaz d'échappement, un dispositif de catalyseur à accumulation de NOx (30) pour la dénitrification du gaz d'échappement, un dispositif (40) pour augmenter activement une température des gaz d'échappement avec au moins un deuxième dispositif de catalyseur d'oxydation ainsi qu'un dispositif (50) pour l'élimination des particules, une température de fonctionnement du dispositif de catalyseur à accumulation de NOx (30) et du dispositif (50) pour l'élimination des particules pouvant être ajustée indépendamment d'une température des gaz d'échappement au niveau d'une sortie du moteur à combustion interne, **caractérisé en ce que** le dispositif de catalyseur à accumulation de NOx (30) comprend un catalyseur SCR utilisant un ammoniac en tant qu'agent de réduction d'oxyde d'azote et il est prévu une unité de perfusion (36) qui peut acheminer un agent de sortie de l'agent réducteur d'oxyde d'azote vers les gaz d'échappement en aval du premier dispositif catalyseur d'oxydation (20) et en amont du dispositif de catalyseur à accumulation NOx (30) et en outre le dispositif (40) pour augmenter activement une température de gaz d'échappement comprend au moins une addition dosée de carburant (46) en amont du deuxième dispositif de catalyseur d'oxydation.

2. Système de post-traitement des gaz d'échappement selon la revendication 1, **caractérisé en ce qu'**est prévu une unité (22) pour générer une chaleur de réaction pour équilibrer la température du dispositif de catalyseur à accumulation NOx (30).

3. Système de post-traitement des gaz d'échappement selon la revendication 2, **caractérisée en ce que** l'unité (22) pour générer une chaleur de réaction est disposée en amont du premier dispositif de catalyseur d'oxydation (20) ou en amont du dispositif de catalyseur à accumulation NOx (30) et en aval du premier dispositif de catalyseur d'oxydation (20).

4. Système de post-traitement des gaz d'échappement selon l'une quelconque des revendications précédentes, **caractérisé en ce que** le deuxième dispositif de catalyseur d'oxydation est doté de deux passages de flux.

5. Système de post-traitement des gaz d'échappement selon la revendication 4, **caractérisé en ce** l'addition dosée de carburant (46) est effectuée séparément pour chaque catalyseur d'oxydation (42, 44).

6. Système de post-traitement des gaz d'échappement selon la revendication 4, **caractérisé en ce** l'unique addition dosée de carburant (46) alimente de façon commune tous les catalyseurs d'oxydation (42, 44) du dispositif (40) pour augmenter activement une température de gaz d'échappement.

7. Système de post-traitement des gaz d'échappement selon l'une quelconque des revendications précédentes, **caractérisé en ce que** le dispositif de catalyseur à accumulation de NOx (30) est doté de deux passages de flux.

8. Système de post-traitement des gaz d'échappement selon l'une quelconque des revendications précédentes, **caractérisé en ce que** le dispositif (50) pour l'élimination des particules est doté de deux passages de flux.

9. Système de post-traitement des gaz d'échappement selon l'une quelconque des revendications précédentes, **caractérisé en ce qu'**au moins un catalyseur d'oxydation (42, 44) du dispositif (40) pour augmenter activement la température de gaz d'échappement et / ou le premier catalyseur d'oxydation (20) sont intégrés dans le dispositif (50) pour l'élimination des particules,

10. Système de post-traitement des gaz d'échappement selon l'une quelconque des revendications précédentes, **caractérisé en ce qu'**est prévu un troisième dispositif de catalyseur d'oxydation (60) en aval du dispositif (50) pour l'élimination des particules.

11. Système de post-traitement des gaz d'échappement selon la revendication 10, **caractérisé en ce que** le troisième dispositif (60) de catalyseur d'oxydation est doté d'un ou de deux passages de flux.

12. Système de post-traitement des gaz d'échappement selon l'une quelconque des revendications précédentes, **caractérisé en ce qu'**est prévue au moins une sonde de température en amont de la première unité (20) de catalyseur d'oxydation et / ou en aval de l'unité (22) pour générer une chaleur de réaction et / ou en amont du dispositif de catalyseur (30) à accumulation de NOx et / ou en aval du dispositif de catalyseur à accumulation de NOx (30) et / ou en amont du dispositif (40) pour augmenter activement la température de gaz d'échappement et / ou en amont du dispositif (50) pour l'élimination des particules et / ou en aval du dispositif (50) pour l'élimination des particules.

13. Système de post-traitement des gaz d'échappement selon l'une quelconque des revendications précédentes, **caractérisé en ce qu'**en aval du dispositif de catalyseur (30) à accumulation de NOx est prévu un capteur d'ammoniac et / ou un capteur de NOx en aval du dispositif de catalyseur d'accumulation de NOx (30) et / ou en amont du premier dispositif de catalyseur (20) d'oxydation.

14. Système de post-traitement des gaz d'échappement selon l'une quelconque des revendications précédentes, **caractérisé en ce qu'**est prévu un capteur de pression en amont et en aval du dispositif (50) pour l'élimination des particules.

15. Procédé pour purifier les gaz d'échappement dans un système de post-traitement des gaz d'échappement comprenant, disposés les uns derrière les autres dans la direction d'écoulement (70) du gaz d'échappement d'un moteur à combustion interne, un premier dispositif de catalyseur d'oxydation (20), un dispositif de catalyseur à accumulation de NOx (30) pour la dénitrification du gaz d'échappement, un dispositif (40) pour augmenter activement une température de gaz d'échappement ainsi qu'un dispositif (50) pour l'élimination des particules, le dispositif de catalyseur à accumulation de NOx (30) et le dispositif (50) pour l'élimination des particules fonctionnant en cas de besoin indépendamment de la température de gaz d'échappement au niveau d'une sortie du moteur à combustion interne, **caractérisé en ce qu'**en aval du premier dispositif de catalyseur d'oxydation (20) et en amont du dispositif de catalyseur à accumulation de NOx (30) un moyen de sortie pour un agent de réduction d'oxyde d'azote contenant de l'ammoniac est acheminé au gaz d'échappement et l'oxyde d'azote au niveau du dispositif de catalyseur (30) d'accumulation NOx comprenant un catalyseur SCR est réduit par l'utilisation de l'ammoniac et en outre une addition dosée de carburant (46) est préparée en amont d'un deuxième dispositif de catalyseur à oxydation pour le dispositif (40) pour augmenter activement une température de gaz d'échappement.

16. Procédé selon la revendication 15, **caractérisée en ce qu'**est activée une unité (22) pour générer une chaleur de réaction afin d'équilibrer la température du dispositif de catalyseur à accumulation de NOx (30) lorsqu'un fonctionnement réglé d'une addition dosée de carburant du moyen de réduction dans le dispositif de catalyseur à accumulation de NOx (30) et / ou un fonctionnement réglé du dispositif (40) pour augmenter activement une température de gaz d'échappement est nécessaire et que le dispositif de catalyseur à accumulation de NOx (30) et / ou au moins un catalyseur d'oxydation (42, 44) du dispositif pour augmenter activement une température de gaz d'échappement se trouvent respectivement en dehors d'une plage de température préférée.

17. Procédé selon la revendication 15 ou 16, **caractérisé en ce qu'**un fonctionnement réglé du dispositif (40) pour augmenter activement une température de gaz d'échappement est réalisé lorsque le dispositif (50) pour l'élimination des particules, une augmentation de la perte de pression et / ou une température escomptée dans le dispositif (50) pour l'élimination des particules avec le dispositif (40) activé pour augmenter une température de gaz d'échappement dépasse / dépassent une valeur limite et / ou un chargement du dispositif (50) pour l'élimination des particules dépasse / dépassent une valeur limite admissible.

18. Procédé selon l'une quelconque des revendications 15 à 17, **caractérisé en ce que** lorsqu'un dispositif (40) pour augmenter une température des gaz d'échappement est activé, une température moyenne du dispositif (50) pour l'élimination des particules s'élève entre 550°C et 850°C, de préférence entre 600°C et 800°C.

19. Procédé selon l'une quelconque des revendications 15 à 18, **caractérisé en ce qu'**en cas de fonctionnement réglé du dispositif (40) pour augmenter une température de gaz d'échappement, la température de son dispositif de catalyseur d'oxydation est supérieure à 250°C, de préférence à 300°C.
